(19) Europäisches Patentamt / European Patent Office / Office européen des brevets

(11) **EP 3 447 592 B1**

(12) **EUROPEAN PATENT SPECIFICATION**

(45) Date of publication and mention
of the grant of the patent:
**21.10.2020 Bulletin 2020/43**

(51) Int Cl.:
***G05B 19/416*** (2006.01)

(21) Application number: **18188059.2**

(22) Date of filing: **08.08.2018**

(54) **MILLING MACHINE FEED RATE CONTROL**

FRÄSMASCHINENVORSCHUBSTEUERUNG

CONTRÔLE DE LA VITESSE D'AVANCE D'UNE MACHINE DE FRAISAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2017 US 201715671844**

(43) Date of publication of application:
**27.02.2019 Bulletin 2019/09**

(73) Proprietor: **United Technologies Corporation Farmington, CT 06032 (US)**

(72) Inventors:
- **KOUNTANYA, Raja**
  **Vernon, CT Connecticut 06066 (US)**
- **GYNTHER, Daniel**
  **Marlborough, CT Connecticut 06447 (US)**
- **TALARICO, Ronald A.**
  **New Hartford, CT Connecticut 06057 (US)**
- **BARNAT, Krzysztof**
  **Berlin, CT Connecticut 06037 (US)**

(74) Representative: **Dehns**
**St. Bride's House**
**10 Salisbury Square**
**London EC4Y 8JD (GB)**

(56) References cited:
**EP-A1- 2 214 070     US-A1- 2016 327 931**

- **DONG ZHAOHUI ET AL: "FEA-based prediction of machined surface errors for dynamic fixture-workpiece system during milling process", THE INTERNATIONAL JOURNAL OF ADVANCED MANUFACTURING TECHNOLOGY, SPRINGER, LONDON, vol. 85, no. 1, 13 October 2015 (2015-10-13), pages 299-315, XP035987330, ISSN: 0268-3768, DOI: 10.1007/S00170-015-7854-Z [retrieved on 2015-10-13]**
- **ZHANG XIAOMING ET AL: "Flexible workpiece vibration suppression in milling process based on a new response metric", 2015 IEEE INTERNATIONAL CONFERENCE ON ADVANCED INTELLIGENT MECHATRONICS (AIM), IEEE, 7 July 2015 (2015-07-07), pages 1508-1513, XP033210719, DOI: 10.1109/AIM.2015.7222755 [retrieved on 2015-08-25]**
- **QINGHUA SONG ET AL: "Application of Sherman-Morrison-Woodbury formulas in instantaneous dynamic of peripheral milling for thin-walled component", INTERNATIONAL JOURNAL OF MECHANICAL SCIENCES., vol. 96-97, 7 April 2015 (2015-04-07), pages 79-90, XP055368617, GB ISSN: 0020-7403, DOI: 10.1016/j.ijmecsci.2015.03.021**

**Description**

BACKGROUND

This disclosure relates generally to milling operations of components, and more particularly to feed rate control of the milling operations based on estimated deflection of the component.

Multiple-axis milling machines are often used during the machining and fabrication of complex components, such as fan blades, integrally bladed rotors or impellers, and other components of, e.g., aircraft gas turbine engines. Such multiple-axis milling machines typically include a rotary cutting tool or other milling tool that removes material from the component according to a programmed sequence of movements of the tool, the component, or both. For instance, many multiple-axis milling machines (e.g., 5-axis milling machines) control movement of both the milling tool and the component (e.g., via a fixture) to enable automated translation between the milling tool and the component and the corresponding material removal in multiple axes.

Components often deflect during the milling operations in response to cutting forces applied by the milling tool at the surface of the component. Such cutting forces are related to the tool-and-part engagement conditions that result from a feed rate of the milling tool defined by a combination of a spindle rate (i.e., rotational speed of the milling tool) and a translational feed rate (i.e., relative speed of the milling tool along the surface of the component). Component deflections can be difficult to measure, but can decrease the accuracy of component dimensions resulting from the milling operations.

DONG ZHAOHUI ET AL discloses "FEA-based prediction of machined surface errors for dynamic fixture-workpiece system during milling process", and the features of the preamble of claim 1.

EP 2 214 070 A1 discloses a prior art machine tool with workpiece size measurement.

US 2016/327931 A1 discloses a prior art system and method for implementing compensation of global and local offsets in computer controlled systems.

ZHANG XIAOMING ET AL discloses "flexible workpiece vibration suppression in milling process based on a new response metric".

QINGHUA SONG ET AL discloses "Sherman-Morrison-Woodbury formulas in instantaneous dynamic of peripheral milling for thin-walled component".

SUMMARY

According to the invention there are provided a method and an apparatus according to claims 1 and 9. Preferable features of the invention are defined in the dependent claims.

BRIEF DESCRIPTION OF THE DRAWINGS

FIG. 1 is a schematic block diagram of an example milling system that adjusts a feed rate of a milling tool based on an estimated deflection of a component during milling operations.

FIG. 2 is a perspective view of a milling tool engaging a component during milling operations.

FIG. 3 is a perspective view of the component of FIG. 2 illustrating a workpiece coordinate system and a surface coordinate system of the component.

FIG. 4 is a flow diagram illustrating example operations to adjust a feed rate of a milling tool based on an estimated deflection of a component during milling operations.

DETAILED DESCRIPTION

A system implementing techniques of this disclosure adjusts a feed rate of a milling tool based on an estimated deflection of a component during milling operations to increase accuracy of the milling operations. As described herein, the system determines an estimated force applied by a milling tool at the surface of the component during the milling operations. The system determines the estimated deflection of the component using compliance tensor data of the component and the estimated force applied by the milling tool. A feed rate including, e.g., at least one of a spindle rate (i.e., a rotational rate of a milling tool) and a translational feed rate (i.e., a relative velocity of the milling tool along the surface of the component) is adjusted based on a comparison of the estimated deflection with one or more deflection criteria. In some examples, the system decreases the feed rate of the milling tool in response to determining that the estimated deflection exceeds maximum deflection criteria, thereby decreasing a force applied by the milling tool at the surface of the component and the corresponding component deflection. As such, techniques of this disclosure can increase an accuracy of the milling operations to produce target dimensions of the component.

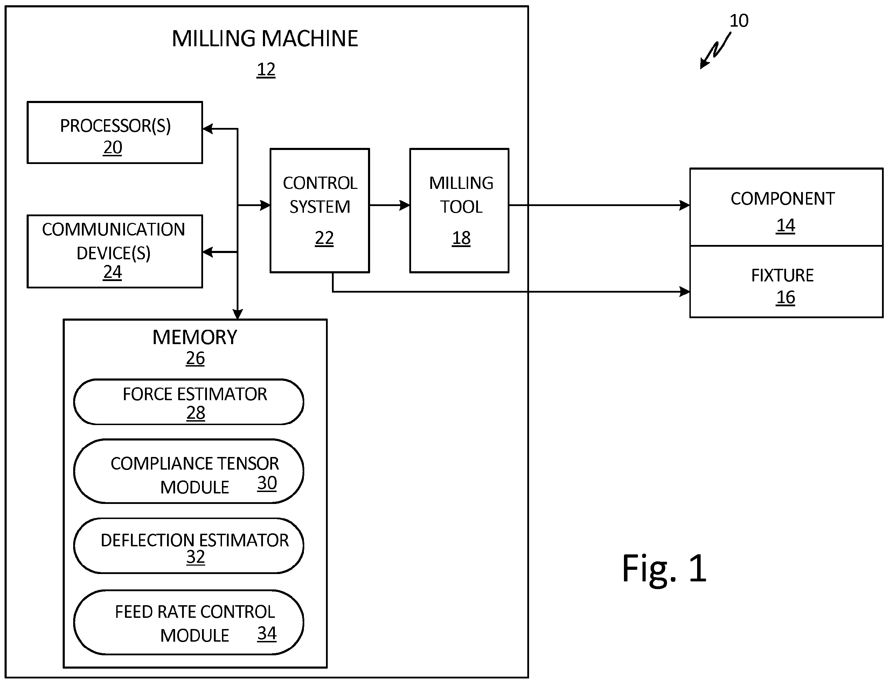

FIG. 1 is a schematic block diagram of milling system 10 that includes milling machine 12, component 14, and fixture 16. Milling machine 12 includes milling tool 18, one or more processors 20, control system 22, one or more communication devices 24, and computer-readable memory 26. Computer-readable memory 26 includes (e.g., stores) force estimator 28, compliance tensor module 30, deflection estimator 32, and feed rate control module 34.

Component 14 can be a fan blade, an integrally bladed rotor or impeller, or other component for, e.g., a gas turbine engine of an aircraft. Component 14 can be, in some examples, formed from a solid forging block by a series of milling or other machining processes (e.g., via milling machine 12 and/or other machine tools) to remove up to ninety percent of the forging block material. Milling machine 12 can be utilized, e.g., for finish milling operations to remove additional material to produce final dimensions of the component. Fixture 16 is a support device configured to securely hold component 14 and to provide a physical interface between milling machine 12 and component 14 during the milling operations.

Milling machine 12 is a numerically-controlled milling machine (e.g., a 5-axis milling machine) that executes sequences of machine control commands stored at, e.g., computer-readable memory 26, to translate and rotate either or both milling tool 18 and fixture 16 (securing component 14) to remove material from component 14 via milling tool 18 to produce target final dimensions of component 14. Milling tool 18 is a cutting tool, such as a rotating end mill, a rotating flank mill, or other cutting tool, configured to remove material from component 14 at a physical interface (i.e., engagement interface) between milling tool 18 and component 14.

As illustrated in FIG. 1, milling machine 12 includes one or more processors 20. Processors 20 are configured to implement functionality and/or process instructions for execution within milling machine 12. For instance, processors 20 can be capable of processing instructions stored at computer-readable memory 26. Examples of one or more processors 20 include any one or more of a microprocessor, a controller, a digital signal processor (DSP), an application specific integrated circuit (ASIC), a field-programmable gate array (FPGA), or other equivalent discrete or integrated logic circuitry.

Computer-readable memory 26 can be configured to store information within milling machine 12 during operation. Computer-readable memory 26, in some examples, is described as a computer-readable storage medium. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, computer-readable memory 26 is a temporary memory, meaning that a primary purpose of computer-readable memory 26 is not long-term storage. Computer-readable memory 26, in some examples, is described as a volatile memory, meaning that computer-readable memory 26 does not maintain stored contents when power to milling machine 12 is removed. Examples of volatile memories can include random access memories (RAM), dynamic random access memories (DRAM), static random access memories (SRAM), and other forms of volatile memories. In some examples, computer-readable memory 26 is used to store program instructions for execution by processors 20. Computer-readable memory 26, in certain examples, is used by software applications running on milling machine 12 to temporarily store information during program execution, such as execution of one or more of force estimator 28, compliance tensor module 30, deflection estimator 32, and feed rate control module 34.

Computer-readable memory 26, in some examples, also include one or more computer-readable storage media. Computer-readable memory 26 can be configured to store larger amounts of information than volatile memory. Computer-readable memory 26 can further be configured for long-term storage of information. In some examples, computer-readable memory 26 include non-volatile storage elements. Examples of non-volatile storage elements can include magnetic hard discs, optical discs, floppy discs, flash memories, or forms of electrically programmable memories (EPROM) or electrically erasable and programmable (EEPROM) memories.

Milling machine 12, as illustrated in FIG. 1, also includes one or more communication devices 24. Milling machine 12, in one example, utilizes communication devices 24 to communicate with external devices via one or more wired or wireless networks, or both. Communication devices 24 can include a network interface card, such as an Ethernet card, an optical transceiver, a radio frequency transceiver, or any other type of device that can send and receive information. Other examples of such network interfaces can include Bluetooth, 3G, 4G, and WiFi radio computing devices, as well as Universal Serial Bus (USB).

Control system 22 can include any one or more of motors, sensors (e.g., position sensors, rate sensors, or other sensors), and discrete and/or integrated logic circuitry to control movement and operation of milling tool 18 and fixture 16 according to a sequence of machine control commands stored at, e.g., computer-readable memory 26 to remove material from component 14 to produce target final dimensions of component 14.

In operation, milling machine 12 adjusts a feed rate of milling tool 18 based on an estimated deflection of component 14 during the milling operations (i.e., during removal of material from component 14 via milling tool 18), as is further described below. For example, force estimator 28 can determine, during the milling operations, an estimated force applied by milling tool 18 at one or more surface points of component 14. Force applied by milling tool 18 to the surface of component 14 is a function of milling process parameters including the feed rate of milling tool 18 defined by a combination of a translational feed rate of milling tool 18 (i.e., relative speed of the milling tool along the surface of the component) and a spindle rate of milling tool 18 (i.e., rotational speed of milling tool 18). That is, as control system 22 translates and rotates milling tool 18 and/or fixture 16 to produce translational movement of milling tool 18 along a surface of component 14 for material removal, a force exerted at the surface of component 14 by milling tool 18 is a function of tool-and-part engagement conditions defined by process parameters including both the translational movement (i.e., the translational feed rate) and the rotational rate of milling tool 18 (i.e., the spindle rate). Force estimator 28 determines an estimated force applied by milling tool 18 at the surface of component 14 (e.g., represented by a three-dimensional force vector in a defined workpiece coordinate system) as a function of the feed rate of milling tool 18 (i.e., including both the translational feed rate and the spindle rate of milling tool 18) and other tool-and-part engagement parameters via, e.g., mechanistic modeling techniques, as is generally known in the art.

Compliance tensor module 30 determines one or more compliance tensors of component 14 associated with one or more points on the surface of component 14, as is further described below. For example, compliance tensor data can be determined at multiple predefined points on the surface of component 14 via, e.g., finite element analysis and stored at computer-readable memory 26. Compliance tensor module 30 can identify a compliance tensor at a point on the surface of component 14 corresponding to engagement between milling tool 18 and component 14 based on the stored compliance tensor data, such as via interpolation between the multiple predefined surface points corresponding to the stored compliance tensor data.

Deflection estimator 32 determines an estimated deflection of component 14 using the estimated force applied by milling tool 18 at the surface point of component 14 and the corresponding compliance tensor at the surface point. For instance, deflection estimator 32 can determine the estimated deflection of component 14 by multiplying the compliance tensor by the estimated force vector to produce, e.g., a three-dimensional deflection vector in the defined workpiece coordinate system, as is further described below.

Feed rate control module 34 adjusts a feed rate of milling tool 18 (e.g., one or more of the translational feed rate and the spindle rate of milling tool 18) based on the estimated deflection of component 14. For instance, feed rate control module 34 can compare the estimated deflection of component 14 to one or more deflection criteria including, e.g., maximum deflection criteria of component 14. Maximum deflection criteria can include a maximum magnitude of deflection of component 14 (i.e., a magnitude of the three-dimensional deflection vector), a maximum magnitude of one or more components of the deflection vector, or other deflection criteria. Feed rate control module 34, in some examples, provides control commands to control system 22 to decrease a feed rate of milling tool 18 (e.g., one or more of the translational feed rate and the spindle rate) in response to determining that the estimated deflection of component 14 exceeds the maximum deflection criteria. The decrease in the feed rate of milling tool 18 decreases the force applied by milling tool 18 and the corresponding deflection of component 14. Accordingly, milling system 10 implementing techniques of this disclosure can increase accuracy of milling operations to produce target dimensions of component 14 by adjusting the feed rate of milling tool 18 based on the estimated deflection of component 14 during the milling operations.

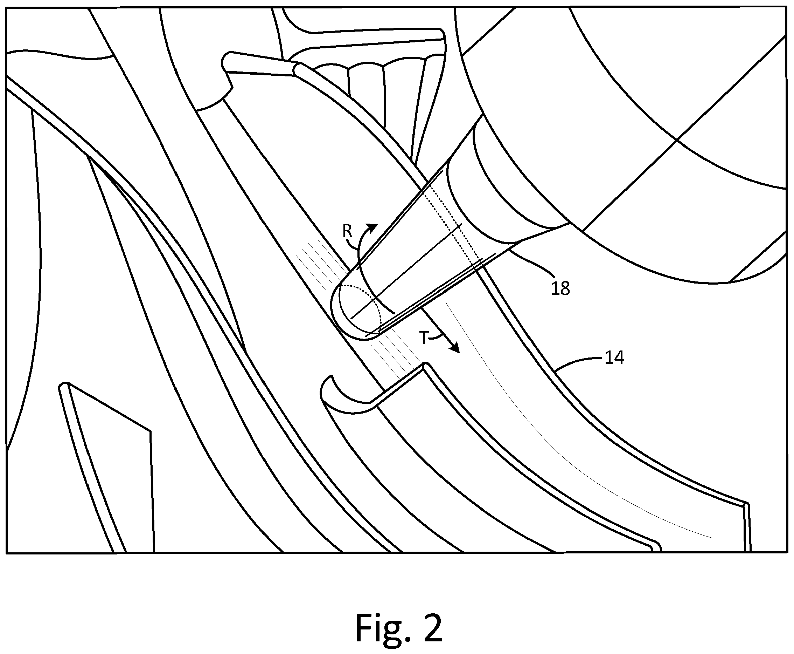

FIG. 2 is a perspective view of milling tool 18 engaging component 14 during milling operations. As illustrated in the example of FIG. 2, component 14 is an impeller of, e.g., a gas turbine engine, having integrally formed vanes. Milling tool 18 is, in this example, a flank milling tool that rotates in direction R and engages a surface of component 14 to remove material (e.g., during finish milling operations) via an outer cutting surface to produce target dimensions of component 14. Milling tool 18, under control of milling machine 12 (FIG. 1), is rotated and translated along the surface of component 14, such as in the illustrated direction T, to remove material from component 14 as milling tool 18 engages the surface of component 14.

A force applied by milling tool 18 at points along the surface of component 14 is a function of the feed rate of milling tool 18 including both the spindle rate of milling tool 18 (e.g., in direction R) and the translational feed rate of milling tool 18 (e.g., in direction T). As is further described below, milling machine 12 determines an estimated force applied by milling tool 18 at surface points of component 14 using, e.g., mechanistic modeling techniques. Milling machine 12 determines a deflection of component 14 associated with the estimated force using compliance tensor data of component 14 corresponding to the surface points. Milling machine 12 adjusts the feed rate, such as the translational feed rate (e.g., in direction T) and/or the spindle rate (e.g., in direction R) based on a comparison of the estimated deflection with one or more deflection criteria. For instance, in response to determining that the estimated deflection exceeds maximum deflection criteria, milling machine 12 can decrease the translational feed rate and/or the spindle rate of milling tool 18, thereby decreasing a force applied by milling tool 18 and the corresponding deflection of component 14. As such, milling machine 12, implementing techniques of this disclosure, can decrease deflection of component 14 during milling operations to increase an accuracy of the milling operations to produce target dimensions of component 14.

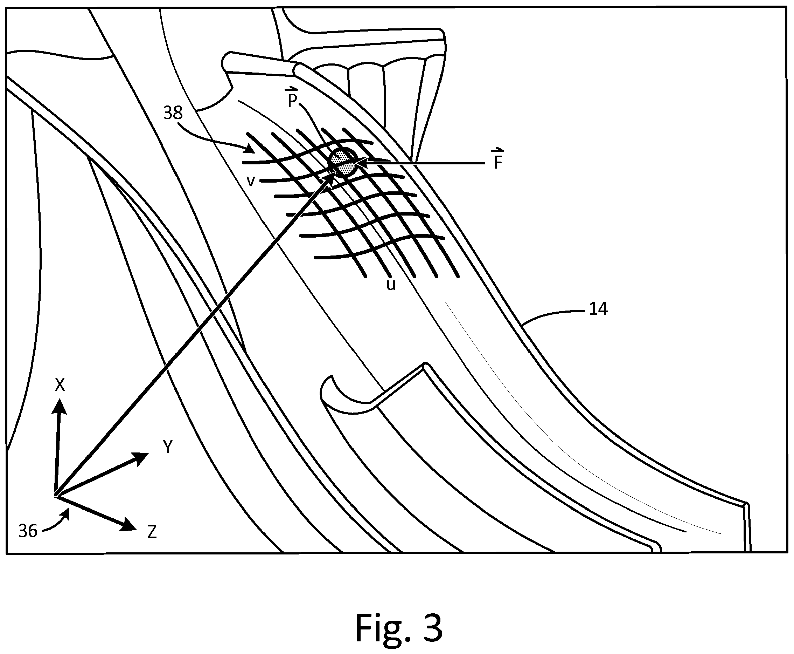

FIG. 3 is a perspective view of component 14 of FIG. 2 illustrating workpiece coordinate system 36 and surface coordinate system 38. Workpiece coordinate system 36 is a Cartesian coordinate system having three mutually-orthogonal axes (i.e., an x-axis, a y-axis, and a z-axis). Workpiece coordinate system 36 is fixed relative to component 14.

Milling machine 12 (FIG. 1) utilizes workpiece coordinate system 36 to coordinate motion of milling tool 18 (FIG. 1) and/or fixture 16 (FIG. 1) during the milling operations. For example, milling machine 12 can designate movement of milling tool 18 and/or fixture 16 relative to workpiece coordinate system 36 such that the movements are coordinated to produce target dimensions of component 14 relative to workpiece coordinate system 36.

Surface coordinate system 38 is a two-dimensional coordinate system have two orthogonal axes (i.e., a u-axis and a v-axis) projected onto the surface of component 14. As illustrated in FIG. 3, surface coordinate system 38 follows a contour of the surface of component 14 to provide a coordinate system defining points on the surface of component 14.

Milling machine 12 stores compliance tensor data for component 14 at a plurality of predefined surface points of component 14 within surface coordinate system 38. For instance, computer readable memory 26 (FIG. 1) of milling machine 12 can store the compliance tensor data corresponding to the plurality of predefined surface points generated by, e.g., finite element analysis operations performed at a remote computer and transmitted to milling machine 12 via communication devices 24 (FIG. 1). Compliance tensor data at the plurality of predefined surface points can correspond to a compliance tensor of component 14 at each of the predefined surface points. In some examples, the compliance tensor data can correspond to intermediate dimensions of component 14 as material is removed by milling tool 18. For instance, the compliance tensor data can correspond to dimensions of component 14 after a first amount of material is removed from component 14 by milling tool 18 but prior to removal of additional material to produce the final dimensions of component 14.

Milling machine 12 can identify a point within surface coordinate system 38 corresponding to engagement of milling tool 18 with component 14 as determined by, e.g., force estimator 28 (FIG. 1). For example, as illustrated in FIG 3, milling machine 12 can identify point P within workpiece coordinate system 36 at which estimated force F is applied by milling tool 18. Milling machine 12 can store a mapping from workpiece coordinate system 36 to surface coordinate system 38 to identify coordinates within surface coordinate system 38 corresponding to point P. Milling machine 12 determines a compliance tensor for component 14 at point P based on the predefined compliance tensor data stored at computer-readable memory 26.

For example, milling machine 12 can identify whether point P is one of the predefined surface points corresponding to the stored compliance tensor data. In examples where point P is one of the predefined surface points of the stored compliance tensor data, milling machine 12 utilizes the stored compliance tensor corresponding to point P for estimation of a deflection of component 14 associated with force F applied by milling tool 18. In examples where point P is not one of the predefined surface points of the stored compliance tensor data, milling machine 12 identifies a plurality of the predefined surface points that are within a threshold distance from point P, such as a group of predefined surface points that enclose point P (e.g., form vertices of a polygon that enclose point P) and are within the threshold distance. In such examples, milling machine 12 determines a compliance tensor corresponding to point P based on interpolation between the compliance tensors corresponding to each of the predefined surface points that are within the threshold distance from point P.

As an example, force F exerted by milling tool 18 at point P can be represented as a three-dimensional vector in workpiece coordinate system 36. The compliance tensor of component 14 corresponding to point P can be represented by a 3x3 matrix of real numbers. The estimated deflection can be represented as a three-dimensional vector in workpiece coordinate system 36. Milling machine 12 can determine the estimated deflection of component 14 associated with force F applied at point P using the following equation:

$$\begin{pmatrix} \delta_x \\ \delta_y \\ \delta_z \end{pmatrix} = \tilde{C} \cdot \begin{pmatrix} F_x \\ F_y \\ F_z \end{pmatrix} \qquad \text{(Equation 1)}$$

where $\delta_x$ is the deflection of component 14 in the x-axis of workpiece coordinate system 36,
where $\delta_y$ is the deflection of component 14 in the y-axis of workpiece coordinate system 36,
where $\delta_z$ is the deflection of component 14 in the z-axis of workpiece coordinate system 36,
where $\tilde{C}$ is the 3x3 compliance tensor matrix corresponding to point P,
where $F_x$ is the component of the force vector applied at point P in the x-axis of workpiece coordinate system 36,
where $F_y$ is the component of the force vector applied at point P in the y-axis of workpiece coordinate system 36, and
where $F_z$ is the component of the force vector applied at point P in the z-axis of workpiece coordinate system 36.

Compliance tensor matrix $\tilde{C}$ in Equation 1 above can be represented as a 3x3 symmetric matrix of real numbers in the following form:

$$\tilde{C} = \begin{pmatrix} C_{xx} & C_{yx} & C_{zx} \\ C_{xy} & C_{yy} & C_{zy} \\ C_{xz} & C_{yz} & C_{zz} \end{pmatrix}$$

where $C_{xx}$ is a constant representing a stiffness of component 14 along the x-axis of workpiece coordinate system 36 when subjected to a force along the x-axis of workpiece coordinate system 36 at point P,

where $C_{xy}$ is a constant representing a stiffness of component 14 along the x-axis of workpiece coordinate system 36 when subjected to a force along the y-axis of workpiece coordinate system 36 at point P,

where $C_{xz}$ is a constant representing a stiffness of component 14 along the x-axis of workpiece coordinate system 36 when subjected to a force along the z-axis of workpiece coordinate system 36 at point P,

where $C_{yx}$ is a constant representing a stiffness of component 14 along the y-axis of workpiece coordinate system 36 when subjected to a force along the x-axis of workpiece coordinate system 36 at point P,

where $C_{yy}$ is a constant representing a stiffness of component 14 along the y-axis of workpiece coordinate system 36 when subjected to a force along the y-axis of workpiece coordinate system 36 at point P,

where $C_{yz}$ is a constant representing a stiffness of component 14 along the y-axis of workpiece coordinate system 36 when subjected to a force along the z-axis of workpiece coordinate system 36 at point P,

where $C_{zx}$ is a constant representing a stiffness of component 14 along the z-axis of workpiece coordinate system 36 when subjected to a force along the x-axis of workpiece coordinate system 36 at point P,

where $C_{zy}$ is a constant representing a stiffness of component 14 along the z-axis of workpiece coordinate system 36 when subjected to a force along the y-axis of workpiece coordinate system 36 at point P, and

where $C_{zz}$ is a constant representing a stiffness of component 14 along the z-axis of workpiece coordinate system 36 when subjected to a force along the z-axis of workpiece coordinate system 36 at point P.

Milling machine 12 determines the estimated deflection of component 14 at points along the surface of component 14 based on the force applied by milling tool 18 and compares the estimated deflection to one or more deflection criteria, such as maximum deflection criteria. Milling machine 12 controls a feed rate of milling tool 18 based on results of the comparison, such as by decreasing the feed rate of milling tool 18 in response to determining that the estimated deflection exceeds maximum deflection criteria. Accordingly, milling machine 12 can control the feed rate of milling tool 18 based on the estimated deflection of component 14, thereby increasing accuracy of the milling operations to produce target dimensions of component 14.

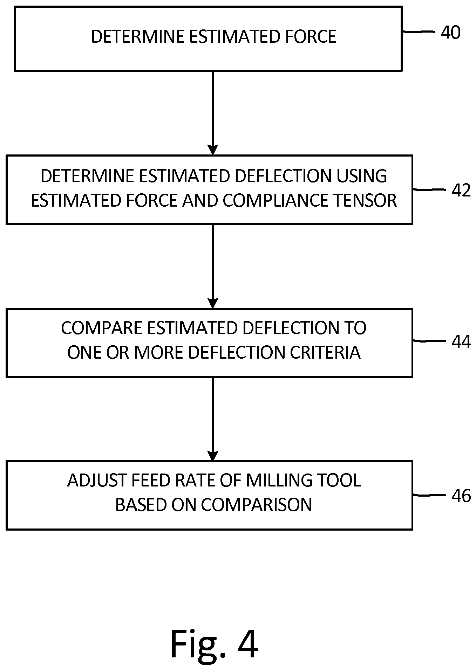

FIG. 4 is a flow diagram illustrating example operations to adjust a feed rate of a milling tool based on an estimated deflection of a component during milling operations. For purposes of clarity and ease of discussion, the example operations are described below within the context of milling system 10 of FIGS. 1-3.

An estimated force applied by a milling tool at a surface point of a component is determined during milling operations of the component (Step 40). For example, force estimator 28 of milling machine 12 can determine an estimated force applied by milling tool 18 at point P of component 14.

An estimated deflection of the component associated with the estimated force is determined using the estimated force and a compliance tensor of the component corresponding to the surface point of the component (Step 42). For example, compliance tensor module 30 of milling machine 12 can determine a compliance tensor of component 14 corresponding to point P. Deflection estimator 32 can determine an estimated deflection of component 14 associated with estimated force F applied by milling tool 18 at point P by multiplying the estimated force F by compliance tensor matrix $\tilde{C}$.

The estimated deflection of the component is compared to one or more deflection criteria (Step 44). For example, feed rate control module 34 can compare the estimated deflection to one or more deflection criteria including, e.g., maximum deflection criteria.

A feed rate of the milling tool is adjusted during the milling operations of the component based on results of the comparison of the estimated deflection to the one or more deflection criteria (Step 46). For example, feed rate control module 34 can provide control commands to control system 22 to cause control system 22 to adjust the feed rate of milling tool 18 based on results of the comparison of the estimated deflection of component 14 to the one or more deflection criteria. In some examples, feed rate control module 34 can provide control commands to control system 22 to cause control system 22 to decrease the feed rate (e.g., including one or more of the spindle rate and the translational feed rate) of milling tool 18 in response to determining that the estimated deflection of component 14 exceeds maximum deflection criteria. In certain examples, feed rate control module 34 can provide control commands to control system 22 to cause control system 22 to increase the feed rate of milling tool 18 in response to determining that the estimated deflection of component 14 does not exceed the maximum deflection criteria. In such examples, feed rate control module 34 can decrease an overall time duration of the milling operations to produce the target dimensions of component 14.

In some examples, feed rate control module 34 can provide the control commands to adjust (e.g., increase and/or decrease) the feed rate of milling tool 18 based on an amount by which the estimated deflection of component 14 deviates from the one or more deflection criteria. For instance, feed rate control module 34 can provide control commands to increase the feed rate of milling tool 18 by an amount that is proportional to a deviation of the estimated deflection from maximum deflection criteria when the estimated deflection does not exceed the maximum deflection criteria. Feed rate control module 34 can provide control commands to decrease the feed rate of milling tool 18 by an amount that is proportional to a deviation of the estimated deflection from maximum deflection criteria when the estimated deflection exceeds the maximum deflection criteria.

Accordingly, milling system 10, implementing techniques of this disclosure, adjusts a feed rate of milling tool 18 based on an estimated deflection of component 14 during milling operations. The techniques described herein can increase an accuracy of milling operations to produce target dimensions of a component, thereby decreasing rework and other inefficiencies that can result from inaccurate milling.

**Discussion of Possible Embodiments**

The following are non-exclusive descriptions of possible embodiments of the present invention.

A method includes determining, during milling operations of a component, an estimated force applied by a milling tool at a surface point of the component. The method further includes determining, using the estimated force and a compliance tensor of the component corresponding to the surface point of the component, an estimated deflection of the component associated with the estimated force. The method further includes comparing the estimated deflection of the component to one or more deflection criteria, and adjusting, during the milling operations of the component, a feed rate of the milling tool based on results of the comparing.

The method of the preceding paragraph can optionally include, additionally and/or alternatively, any one or more of the following features, configurations, operations, and/or additional components:

The method can further include determining the compliance tensor of the component corresponding to the surface point based on compliance tensor data corresponding to each of a plurality of predefined surface points of the component.

Determining the compliance tensor of the component corresponding to the surface point based on the compliance tensor data corresponding to each of the plurality of predefined surface points can include: identifying a plurality of the predefined surface points that are within a threshold distance from the surface point; and determining the compliance tensor for the component corresponding to the surface point based on interpolation between the compliance tensor data corresponding to each of the predefined surface points.

Identifying the plurality of the predefined surface points can include identifying the plurality of the predefined surface points that enclose the surface point.

Determining the estimated deflection of the component associated with the estimated force can include multiplying the estimated force by the compliance tensor to produce the estimated deflection.

The estimated force can be a three-dimensional force vector in a workpiece coordinate system. The estimated deflection can be a three-dimensional deflection vector in the workpiece coordinate system. The compliance tensor can be a 3x3 matrix of real numbers. Multiplying the estimated force by the compliance tensor to produce the estimated deflection can include multiplying the three-dimensional force vector by the 3x3 matrix of real numbers to produce the three-dimensional deflection vector.

The one or more deflection criteria can include maximum deflection criteria. Adjusting the feed rate of the milling tool based on the results of the comparing can include decreasing the feed rate of the milling tool in response to determining that the estimated deflection of the component exceeds the maximum deflection criteria.

The one or more deflection criteria can include maximum deflection criteria. Adjusting the feed rate of the milling tool based on the results of the comparing can include increasing the feed rate of the milling tool in response to determining that the estimated deflection of the component does not exceed the maximum deflection criteria.

Adjusting the feed rate of the milling tool based on the results of the comparing can include adjusting the feed rate of the milling tool based on an amount by which the estimated deflection of the component deviates from the at least one deflection criteria.

Adjusting the feed rate can include adjusting at least one of a spindle rate and a translational feed rate of the milling tool.

The compliance tensor of the component corresponding to the surface point of the component can be based on intermediate dimensions of the component after a first amount of material is removed from the component by the milling tool.

A milling machine includes a milling tool, a control system, one or more processors, and computer-readable memory. The milling tool is configured to remove material from a component during milling operations. The control system is configured to control a feed rate of the milling tool during the milling operations. The computer-readable memory is encoded with instructions that, when executed by the one or more processors, cause the milling machine to determine an estimated force applied by the milling tool at a surface point of the component during the milling operations, and determine, using the estimated force and a compliance tensor of the component corresponding to the surface point of the component, an estimated deflection of the component associated with the estimated force. The computer-readable memory is further encoded with instructions that, when executed by the one or more processors, cause the milling machine to compare the estimated deflection of the component to one or more deflection criteria to produce deflection comparison results, and provide control commands to the control system to cause the control system to adjust the feed rate of the milling tool during the milling operations based on the deflection comparison results.

The milling machine of the preceding paragraph can optionally include, additionally and/or alternatively, any one or more of the following features, configurations, operations, and/or additional components:

The computer-readable memory can be further encoded with instructions that, when executed by the one or more processors, cause the milling machine to determine the compliance tensor of the component corresponding to the surface point based on compliance tensor data corresponding to each of a plurality of predefined surface points of the component.

The computer-readable memory can be further encoded with instructions that, when executed by the one or more processors, cause the milling machine to determine the compliance tensor of the component corresponding to the surface point based on the compliance tensor data corresponding to each of the plurality of predefined surface points by causing the milling machine to: identify a plurality of the predefined surface points that are within a threshold distance from the surface point; and determine the compliance tensor for the component corresponding to the surface point based on interpolation between the compliance tensor data corresponding to each of the predefined surface points.

The computer-readable memory can be further encoded with instructions that, when executed by the one or more processors, cause the milling machine to identify the plurality of predefined surface points by causing the milling machine to identify the plurality of predefined surface points that enclose the surface point.

The computer-readable memory can be further encoded with instructions that, when executed by the one or more processors, cause the milling machine to determine the estimated deflection of the component associated with the estimated force by multiplying the estimated force by the compliance tensor to produce the estimated deflection.

The estimated force can be a three-dimensional force vector in a workpiece coordinate system. The estimated deflection can be a three-dimensional deflection vector in the workpiece coordinate system. The compliance tensor can be a 3x3 matrix of real numbers. The computer-readable memory can be further encoded with instructions that, when executed by the one or more processors, cause the milling machine to determine the estimated deflection of the component associated with the estimated force by multiplying the three-dimensional force vector by the 3x3 matrix of real numbers to produce the three-dimensional deflection vector.

The one or more deflection criteria can include maximum deflection criteria. The computer-readable memory can be further encoded with instructions that, when executed by the one or more processors, cause the milling machine to provide the control commands to the control system to cause the control system to adjust the feed rate of the milling tool based on the deflection comparison results by decreasing the feed rate of the milling tool in response to determining that the estimated deflection of the component exceeds the maximum deflection criteria.

The one or more deflection criteria can include maximum deflection criteria. The computer-readable memory can be further encoded with instructions that, when executed by the one or more processors, cause the milling machine to provide the control commands to the control system to cause the control system to adjust the feed rate of the milling tool based on the deflection comparison results by increasing the feed rate of the milling tool in response to determining that the estimated deflection of the component does not exceed the maximum deflection criteria.

The computer-readable memory can be further encoded with instructions that, when executed by the one or more processors, cause the milling machine to provide the control commands to the control system to cause the control system to adjust the feed rate of the milling tool based on an amount by which the estimated deflection of the component deviates from the at least one deflection criteria.

The computer-readable memory can be further encoded with instructions that, when executed by the one or more processors, cause the milling machine to provide the control commands to the control system to cause the control system to adjust the feed rate of the milling tool by adjusting at least one of a spindle rate of the milling tool and a translational feed rate of the milling tool.

While the invention has been described with reference to an exemplary embodiment(s), it will be understood by those skilled in the art that various changes may be made and equivalents may be substituted for elements thereof without departing from the scope of the appended claims. In addition, many modifications may be made to adapt a particular situation or material to the teachings of the invention without departing from the scope of the appended claims. Therefore, it is intended that the invention not be limited to the particular embodiment(s) disclosed, but that the invention will include all embodiments falling within the scope of the appended claims.

## Claims

1. A method comprising:

   determining, during milling operations of a component (14), an estimated force (F) applied by a milling tool (18) at a surface point of the component (14);

   determining, using the estimated force (F) and a compliance tensor of the component (14) corresponding to the surface point of the component (14), an estimated deflection of the component (14) associated with the estimated force (F) wherein the compliance tensor is representative of a stiffness of the component (14);

   comparing the estimated deflection of the component (14) to one or more deflection criteria; and **characterised by**:

   adjusting, during the milling operations of the component (14), a feed rate of the milling tool (18) based on results of the comparing.

2. The method of claim 1, further comprising:
   determining the compliance tensor of the component (14) corresponding to the surface point based on compliance tensor data corresponding to each of a plurality of predefined surface points of the component (14).

3. The method of claim 2,
   wherein determining the compliance tensor of the component (14) corresponding to the surface point based on the compliance tensor data corresponding to each of the plurality of predefined surface points comprises:

   identifying a plurality of the predefined surface points that are within a threshold distance from the surface point; and

   determining the compliance tensor for the component (14) corresponding to the surface point based on interpolation between the compliance tensor data corresponding to each of the predefined surface points,

   wherein identifying the plurality of the predefined surface points comprises identifying the plurality of the predefined surface points that enclose the surface point.

4. The method of any preceding claim,
   wherein determining the estimated deflection of the component associated with the estimated force (F) comprises multiplying the estimated force (F) by the compliance tensor to produce the estimated deflection,
   wherein:

   the estimated force (F) is a three-dimensional force vector in a workpiece coordinate system (36);
   the estimated deflection is a three-dimensional deflection vector in the workpiece coordinate system (36);
   the compliance tensor is a 3x3 matrix of real numbers; and
   multiplying the estimated force (F) by the compliance tensor to produce the estimated deflection comprises multiplying the three-dimensional force vector by the 3x3 matrix of real numbers to produce the three-dimensional deflection vector.

5. The method of any preceding claim,
   wherein the one or more deflection criteria include maximum deflection criteria; and wherein:

   adjusting the feed rate of the milling tool (18) based on the results of the comparing comprises decreasing the feed rate of the milling tool (18) in response to determining that the estimated deflection of the component (14) exceeds the maximum deflection criteria; or
   adjusting the feed rate of the milling tool (18) based on the results of the comparing comprises increasing the feed rate of the milling tool (18) in response to determining that the estimated deflection of the component (14) does not exceed the maximum deflection criteria.

6. The method of any preceding claim,
   wherein adjusting the feed rate of the milling tool (18) based on the results of the comparing comprises adjusting the feed rate of the milling tool (18) based on an amount by which the estimated deflection of the component (14) deviates from the at least one deflection criteria.

7. The method of any preceding claim,

wherein adjusting the feed rate comprises adjusting at least one of a spindle rate and a translational feed rate of the milling tool (18).

8. The method of any preceding claim,
   wherein the compliance tensor of the component (14) corresponding to the surface point of the component (14) is based on intermediate dimensions of the component (14) after a first amount of material is removed from the component (14) by the milling tool (18).

9. A milling machine comprising:

   a milling tool (18) configured to remove material from a component (14) during milling operations;
   a control system (22) configured to control a feed rate of the milling tool (18) during the milling operations;
   one or more processors (20); and
   computer-readable memory (26) encoded with instructions that, when executed by the one or more processors (20), cause the milling machine to:

   determine an estimated force (F) applied by the milling tool (18) at a surface point of the component (14) during the milling operations;
   determine, using the estimated force (F) and a compliance tensor of the component (14) corresponding to the surface point of the component (14), an estimated deflection of the component (14) associated with the estimated force, wherein the compliance tensor is representative of a stiffness of the component (14); and
   compare the estimated deflection of the component (14) to one or more deflection criteria to produce deflection comparison results;
   **characterised in that** the computer-readable memory (26) is encoded with instructions that, when executed by the one or more processors (20), cause the milling machine to:
   provide control commands to the control system (22) to cause the control system (22) to adjust the feed rate of the milling tool (18) during the milling operations based on the deflection comparison results.

10. The milling machine of claim 9,
    wherein the computer-readable memory (26) is further encoded with instructions that, when executed by the one or more processors (20), cause the milling machine to determine the compliance tensor of the component (14) corresponding to the surface point based on compliance tensor data corresponding to each of a plurality of predefined surface points of the component (14).

11. The milling machine of claim 10,
    wherein the computer-readable memory (26) is further encoded with instructions that, when executed by the one or more processors (20), cause the milling machine to determine the compliance tensor of the component (14) corresponding to the surface point based on the compliance tensor data corresponding to each of the plurality of predefined surface points by causing the milling machine to:

    identify a plurality of the predefined surface points that are within a threshold distance from the surface point; and
    determine the compliance tensor for the component corresponding to the surface point based on interpolation between the compliance tensor data corresponding to each of the predefined surface points,

    wherein the computer-readable memory (26) is further encoded with instructions that, when executed by the one or more processors (20), cause the milling machine to identify the plurality of predefined surface points by causing the milling machine to identify the plurality of predefined surface points that enclose the surface point.

12. The milling machine of claim 9, 10 or 11,
    wherein the computer-readable memory (26) is further encoded with instructions that, when executed by the one or more processors (20), cause the milling machine to determine the estimated deflection of the component (14) associated with the estimated force (F) by multiplying the estimated force (F) by the compliance tensor to produce the estimated deflection,
    wherein:

    the estimated force (F) is a three-dimensional force vector in a workpiece coordinate system (36);
    the estimated deflection is a three-dimensional deflection vector in the workpiece coordinate system (36);
    the compliance tensor is a 3x3 matrix of real numbers; and

the computer-readable memory (26) is further encoded with instructions that, when executed by the one or more processors (20), cause the milling machine to determine the estimated deflection of the component (14) associated with the estimated force (F) by multiplying the three-dimensional force vector by the 3x3 matrix of real numbers to produce the three-dimensional deflection vector.

13. The milling machine of any of claims 9 to 12,
wherein the one or more deflection criteria include maximum deflection criteria; and
wherein the computer-readable memory (26) is further encoded with instructions that, when executed by the one or more processors (20), cause the milling machine to provide the control commands to the control system (22) to cause the control system (22) to adjust the feed rate of the milling tool (18) based on the deflection comparison results by decreasing the feed rate of the milling tool (18) in response to determining that the estimated deflection of the component (14) exceeds the maximum deflection criteria.

14. The milling machine of any of claims 9 to 13,
wherein the computer-readable memory (26) is further encoded with instructions that, when executed by the one or more processors (20), cause the milling machine to provide the control commands to the control system (22) to cause the control system (22) to adjust the feed rate of the milling tool (18) based on an amount by which the estimated deflection of the component deviates from the at least one deflection criteria.

15. The milling machine of any of claims 9 to 14,
wherein the computer-readable memory (26) is further encoded with instructions that, when executed by the one or more processors (20), cause the milling machine to provide the control commands to the control system (22) to cause the control system (22) to adjust the feed rate of the milling tool (18) by adjusting at least one of a spindle rate of the milling tool (18) and a translational feed rate of the milling tool (18).

**Patentansprüche**

1. Verfahren, umfassend:

Bestimmen einer geschätzten Kraft (F) während Fräßvorgängen einer Komponente (14), die durch ein Fräßwerkzeug (18) auf einen Oberflächenpunkt der Komponente (14) ausgeübt wird;
Bestimmen unter Verwendung der geschätzten Kraft (F) und eines Konformitätstensors der Komponente (14), der dem Oberflächenpunkt der Komponente (14) entspricht, einer geschätzten Ablenkung der Komponente (14), die der geschätzten Kraft (F) zugeordnet ist, wobei der Konformitätstensor repräsentativ für eine Steifigkeit der Komponente (14) ist;
Vergleichen der geschätzten Ablenkung der Komponente (14) mit einem Ablenkungskriterium oder mehreren Ablenkungskriterien;
und **gekennzeichnet durch**:
Einstellen eines Vorschubs des Fräßwerkzeugs (18) auf Grundlage von Ergebnissen des Vergleichens während der Fräßvorgänge der Komponente (14).

2. Verfahren nach Anspruch 1, ferner umfassend:
Bestimmen des Konformitätstensors der Komponente (14), der dem Oberflächenpunkt entspricht, auf Grundlage von Konformitätstensordaten, die jedem einer Vielzahl von vordefinierten Oberflächenpunkten der Komponente (14) entsprechen.

3. Verfahren nach Anspruch 2,
wobei das Bestimmen des Konformitätstensors der Komponente (14), der dem Oberflächenpunkt entspricht, auf Grundlage der Konformitätstensordaten, die jedem der Vielzahl von vordefinierten Oberflächenpunkten entsprechen, Folgendes umfasst:

Identifizieren einer Vielzahl der vordefinierten Oberflächenpunkte, die sich innerhalb einer Schwellenentfernung von dem Oberflächenpunkt befinden; und
Bestimmen des Konformitätstensors für die Komponente (14), der dem Oberflächenpunkt entspricht, auf Grundlage einer Interpolation zwischen den Konformitätstensordaten, die jedem der vordefinierten Oberflächenpunkten entsprechen,
wobei das Identifizieren der Vielzahl der vordefinierten Oberflächenpunkten Identifizieren der Vielzahl der vordefinierten Oberflächenpunkte umfasst, die den Oberflächenpunkt umschließen.

4. Verfahren nach einem der vorangehenden Ansprüche,
wobei das Bestimmen der geschätzten Ablenkung der Komponente, die der geschätzten Kraft (F) zugeordnet ist,
Multiplizieren der geschätzten Kraft (F) mit dem Konformitätstensor umfasst, um die geschätzte Ablenkung zu erzeugen,
wobei:

die geschätzte Kraft (F) ein dreidimensionaler Kraftvektor in einem Koordinatensystem (36) eines Werkstücks ist;
die geschätzte Ablenkung ein dreidimensionaler Ablenkungsvektor in dem Koordinatensystem (36) des Werkstücks ist;
der Konformitätstensor eine 3x3-Matrix aus realen Zahlen ist; und
das Multiplizieren der geschätzten Kraft (F) mit dem Konformitätstensor, um die geschätzte Ablenkung zu erzeugen, Multiplizieren des dreidimensionalen Kraftvektors mit der 3x3-Matrix aus realen Zahlen umfasst, um den dreidimensionalen Ablenkungsvektor zu erzeugen.

5. Verfahren nach einem der vorangehenden Ansprüche,
wobei das eine Ablenkungskriterium oder die mehreren Ablenkungskriterien ein Kriterium der maximalen Ablenkung beinhalten; und
wobei:

das Einstellen des Vorschubs des Fräßwerkzeugs (18) auf Grundlage der Ergebnisse des Vergleichs Verringern des Vorschubs des Fräßwerkzeugs (18) als Reaktion auf Bestimmen, dass die geschätzte Ablenkung der Komponente (14) das Kriterium der maximalen Ablenkung überschreitet, umfasst; oder
das Einstellen des Vorschubs des Fräßwerkzeugs (18) auf Grundlage der Ergebnisse des Vergleichs Erhöhen des Vorschubs des Fräßwerkzeugs (18) als Reaktion auf Bestimmen, dass die geschätzte Ablenkung der Komponente (14) das Kriterium der maximalen Ablenkung nicht überschreitet, umfasst.

6. Verfahren nach einem der vorangehenden Ansprüche,
wobei das Einstellen des Vorschubs des Fräßwerkzeugs (18) auf Grundlage der Ergebnisse des Vergleichs Einstellen des Vorschubs des Fräßwerkzeugs (18) auf Grundlage eines Betrags, um den die geschätzte Ablenkung der Komponente (14) von dem zumindest einen Ablenkkriterium abweicht, umfasst.

7. Verfahren nach einem der vorangehenden Ansprüche,
wobei das Einstellen des Vorschubs Einstellen von zumindest einem von einer Achsendrehzahl und einem translatorischen Vorschub des Fräßwerkzeugs (18) umfasst.

8. Verfahren nach einem der vorangehenden Ansprüche,
wobei der Konformitätstensor der Komponente (14), der dem Oberflächenpunkt der Komponente (14) entspricht, auf Zwischenabmessungen der Komponente (14), nachdem eine erste Menge an Material durch das Fräßwerkzeug (18) von der Komponente (14) entfernt wurde, basiert.

9. Fräßmaschine, umfassend:

ein Fräßwerkzeug (18), das konfiguriert ist, um während Fräßvorgängen Material von einer Komponente (14) zu entfernen;
ein Steuersystem (22), das konfiguriert ist, um einen Vorschub des Fräßwerkzeugs (18) während der Fräßvorgänge zu steuern;
einen oder mehrere Prozessoren (20); und
einen computerlesbaren Speicher (26), der mit Anweisungen kodiert ist, die bei Ausführung durch den einen oder die mehreren Prozessoren (20) die Fräßmaschine zu Folgendem veranlassen:

Bestimmen einer geschätzten Kraft (F) während der Fräßvorgänge, die durch das Fräßwerkzeug (18) auf einen Oberflächenpunkt der Komponente (14) ausgeübt wird;
Bestimmen unter Verwendung der geschätzten Kraft (F) und eines Konformitätstensors der Komponente (14), der dem Oberflächenpunkt der Komponente (14) entspricht, einer geschätzten Ablenkung der Komponente (14), die der geschätzten Kraft zugeordnet ist, wobei der Konformitätstensor repräsentativ für eine Steifigkeit der Komponente (14) ist; und

Vergleichen der geschätzten Ablenkung der Komponente (14) mit einem Ablenkungskriterium oder mehreren Ablenkungskriterien, um Ergebnisse des Ablenkungsvergleichs zu erzeugen;

**gekennzeichnet dadurch, dass** der computerlesbare Speicher (26) mit Anweisungen kodiert ist, die bei Ausführung durch den einen oder die mehreren Prozessoren (20) die Fräßmaschine zu Folgendem veranlassen: Bereitstellen von Steuerbefehlen an dem Steuersystem (22), um das Steuersystem (22) dazu zu veranlassen, den Vorschub des Fräßwerkzeugs (18) während der Fräßvorgänge auf Grundlage der Ergebnisse des Ablenkungsvergleichs einzustellen.

10. Fräßmaschine nach Anspruch 9,
wobei der computerlesbare Speicher (26) ferner mit Anweisungen kodiert ist, die bei Ausführung durch den einen oder die mehreren Prozessoren (20) die Fräßmaschine dazu veranlassen, den Konformitätstensor der Komponente (14), der dem Oberflächenpunkt entspricht, auf Grundlage von Konformitätstensordaten zu bestimmen, die jedem der Vielzahl von vordefinierten Oberflächenpunkten der Komponente (14) entsprechen.

11. Fräßmaschine nach Anspruch 10,
wobei der computerlesbare Speicher (26) ferner mit Anweisungen kodiert ist, die bei Ausführung durch den einen oder die mehreren Prozessoren (20) die Fräßmaschine dazu veranlassen, den Konformitätstensor der Komponente (14), der dem Oberflächenpunkt entspricht, auf Grundlage der Konformitätstensordaten zu bestimmen, die jedem der Vielzahl von vordefinierten Oberflächenpunkten entsprechen, indem die Fräßmaschine zu Folgendem veranlasst wird:

Identifizieren einer Vielzahl der vordefinierten Oberflächenpunkte, die sich innerhalb einer Schwellenentfernung von dem Oberflächenpunkt befinden; und
Bestimmen des Konformitätstensors für die Komponente, der dem Oberflächenpunkt entspricht, auf Grundlage einer Interpolation zwischen den Konformitätstensordaten, die jedem der vordefinierten Oberflächenpunkten entsprechen,
wobei der computerlesbare Speicher (26) ferner mit Anweisungen kodiert ist, die bei Ausführung durch den einen oder die mehreren Prozessoren (20) die Fräßmaschine dazu veranlassen, die Vielzahl von vordefinierten Oberflächenpunkten zu identifizieren, die den Oberflächenpunkt umschließen.

12. Fräßmaschine nach Anspruch 9, 10 oder 11,
wobei der computerlesbare Speicher (26) ferner mit Anweisungen kodiert ist, die bei Ausführung durch den einen oder die mehreren Prozessoren (20) die Fräßmaschine dazu veranlassen, die geschätzte Ablenkung der Komponente (14), die der geschätzten Kraft (F) zugeordnet ist, durch Multiplizieren der geschätzten Kraft (F) mit dem Konformitätstensor zu bestimmen, um die geschätzte Ablenkung zu erzeugen,
wobei:

die geschätzte Kraft (F) ein dreidimensionaler Kraftvektor in einem Koordinatensystem (36) eines Werkstücks ist;
die geschätzte Ablenkung ein dreidimensionaler Ablenkungsvektor in dem Koordinatensystem (36) des Werkstücks ist;
der Konformitätstensor eine 3x3-Matrix aus realen Zahlen ist; und
der computerlesbare Speicher (26) ferner mit Anweisungen kodiert ist, die bei Ausführung durch den einen oder die mehreren Prozessoren (20) die Fräßmaschine dazu veranlassen, die geschätzte Ablenkung der Komponente (14), die der geschätzten Kraft (F) zugeordnet ist, durch Multiplizieren des dreidimensionalen Kraftvektors mit der 3x3-Matrix von realen Zahlen zu bestimmen, um den dreidimensionalen Ablenkungsvektor zu erzeugen.

13. Fräßmaschine nach einem der Ansprüche 9 bis 12,
wobei das eine Ablenkungskriterium oder die mehreren Ablenkungskriterien ein Kriterium der maximalen Ablenkung beinhalten; und
wobei der computerlesbare Speicher (26) ferner mit Anweisungen kodiert ist, die bei Ausführung durch den einen oder die mehreren Prozessoren (20) die Fräßmaschine dazu veranlassen, die Steuerbefehle an dem Steuersystem (22) bereitzustellen, um das Steuersystem (22) dazu zu veranlassen, den Vorschub des Fräßwerkzeugs (18) auf Grundlage der Ergebnisse des Ablenkungsvergleichs durch Verringern des Vorschubs des Fräßwerkzeugs (18) als Reaktion auf Bestimmen, dass die geschätzte Ablenkung der Komponente (14) das Kriterium der maximalen Ablenkung überschreitet, einzustellen.

**14.** Fräßmaschine nach einem der Ansprüche 9 bis 13,
wobei der computerlesbare Speicher (26) ferner mit Anweisungen kodiert ist, die bei Ausführung durch den einen oder die mehreren Prozessoren (20) die Fräßmaschine dazu veranlassen, die Steuerbefehle an dem Steuersystem (22) bereitzustellen, um das Steuersystem (22) dazu zu veranlassen, den Vorschub des Fräßwerkzeugs (18) auf Grundlage eines Betrags einzustellen, um den die geschätzte Ablenkung der Komponente von dem zumindest einen Ablenkungskriterium abweicht.

**15.** Fräßmaschine nach einem der Ansprüche 9 bis 14,
wobei der computerlesbare Speicher (26) ferner mit Anweisungen kodiert ist, die bei Ausführung durch den einen oder die mehreren Prozessoren (20) die Fräßmaschine dazu veranlassen, die Steuerbefehle an dem Steuersystem (22) bereitzustellen, um das Steuersystem (22) dazu zu veranlassen, den Vorschub des Fräßwerkzeugs (18) durch Einstellen von zumindest einem von einer Achsendrehzahl des Fräßwerkzeugs (18) und einem translatorischen Vorschub des Fräßwerkzeugs (18) einzustellen.

**Revendications**

**1.** Procédé comprenant :

la détermination, pendant les opérations de fraisage d'un composant (14), d'une force estimée (F) appliquée par un outil de fraisage (18) au niveau d'un point de surface du composant (14) ;
la détermination, à l'aide de la force estimée (F) et d'un tenseur d'élasticité du composant (14) correspondant au point de surface du composant (14), d'une déflexion estimée du composant (14) associée à la force estimée (F) dans lequel le tenseur d'élasticité est représentatif d'une rigidité du composant (14) ;
la comparaison de la déflexion estimée du composant (14) à un ou plusieurs critères de déflexion ; et **caractérisé par** :
le réglage, pendant les opérations de fraisage du composant (14), d'un débit d'alimentation de l'outil de fraisage (18) sur la base des résultats de la comparaison.

**2.** Procédé selon la revendication 1, comprenant en outre :
la détermination du tenseur d'élasticité du composant (14) correspondant au point de surface sur la base des données de tenseur d'élasticité correspondant à chacun d'une pluralité de points de surface prédéfinis du composant (14).

**3.** Procédé selon la revendication 2,
dans lequel la détermination du tenseur d'élasticité du composant (14) correspondant au point de surface sur la base des données de tenseur d'élasticité correspondant à chacun de la pluralité de points de surface prédéfinis comprend :

l'identification d'une pluralité des points de surface prédéfinis qui sont à une distance seuil du point de surface ; et
la détermination du tenseur d'élasticité pour le composant (14) correspondant au point de surface sur la base d'une interpolation entre les données de tenseur d'élasticité correspondant à chacun des points de surface prédéfinis,
dans lequel l'identification de la pluralité des points de surface prédéfinis comprend l'identification de la pluralité des points de surface prédéfinis qui renferment le point de surface.

**4.** Procédé selon une quelconque revendication précédente, dans lequel la détermination de la déflexion estimée du composant associée à la force estimée (F) comprend la multiplication de la force estimée (F) par le tenseur d'élasticité pour produire la déflexion estimée,
dans lequel :

la force estimée (F) est un vecteur de force tridimensionnel dans un système de coordonnées de pièce (36) ;
la déflexion estimée est un vecteur de déflexion tridimensionnel dans le système de coordonnées de pièce (36) ;
le tenseur d'élasticité est une matrice 3x3 de nombres réels ; et
la multiplication de la force estimée (F) par le tenseur d'élasticité pour produire la déflexion estimée comprend la multiplication du vecteur de force tridimensionnel par la matrice 3x3 de nombres réels pour produire le vecteur de déflexion tridimensionnel.

**5.** Procédé selon une quelconque revendication précédente, dans lequel les un ou plusieurs critères de déflexion comportent des critères de déflexion maximale ; et
dans lequel :
le réglage du débit d'alimentation de l'outil de fraisage (18) sur la base des résultats de la comparaison comprend la diminution du débit d'alimentation de l'outil de fraisage (18) en réponse à la détermination que la déflexion estimée du composant (14) dépasse les critères de déflexion maximale ; ou le réglage du débit d'alimentation de l'outil de fraisage (18) sur la base des résultats de la comparaison comprend l'augmentation du débit d'alimentation de l'outil de fraisage (18) en réponse à la détermination que la déflexion estimée du composant (14) ne dépasse pas les critères de déflexion maximale.

**6.** Procédé selon une quelconque revendication précédente, dans lequel le réglage du débit d'alimentation de l'outil de fraisage (18) sur la base des résultats de la comparaison comprend le réglage du débit d'alimentation de l'outil de fraisage (18) sur la base d'une quantité selon laquelle la déflexion estimée du composant (14) s'écarte de l'au moins un critère de déflexion.

**7.** Procédé selon une quelconque revendication précédente, dans lequel le réglage du débit d'alimentation comprend le réglage d'au moins l'un parmi un débit de broche et un débit d'alimentation de translation de l'outil de fraisage (18).

**8.** Procédé selon une quelconque revendication précédente, dans lequel le tenseur d'élasticité du composant (14) correspondant au point de surface du composant (14) est basé sur des dimensions intermédiaires du composant (14) après qu'une première quantité de matériau a été retirée du composant (14) par l'outil de fraisage (18).

**9.** Machine de fraisage comprenant :

un outil de fraisage (18) configuré pour retirer du matériau d'un composant (14) pendant les opérations de fraisage ;
un système de commande (22) configuré pour commander un débit d'alimentation de l'outil de fraisage (18) pendant les opérations de fraisage ;
un ou plusieurs processeurs (20) ; et
une mémoire lisible par ordinateur (26) codée avec des instructions qui, lorsqu'elles sont exécutées par les un ou plusieurs processeurs (20), amènent la machine de fraisage à :

déterminer une force estimée (F) appliquée par l'outil de fraisage (18) au niveau d'un point de surface du composant (14) pendant les opérations de fraisage ;
déterminer, à l'aide de la force estimée (F) et d'un tenseur d'élasticité du composant (14) correspondant au point de surface du composant (14), une déflexion estimée du composant (14) associée à la force estimée, dans laquelle le tenseur d'élasticité est représentatif d'une rigidité du composant (14) ; et
comparer la déflexion estimée du composant (14) à un ou plusieurs critères de déflexion pour produire des résultats de comparaison de déflexion ;

**caractérisé en ce que** la mémoire lisible par ordinateur (26) est codée avec des instructions qui, lorsqu'elles sont exécutées par les un ou plusieurs processeurs (20), amènent la machine de fraisage à :
fournir des commandes de contrôle au système de commande (22) pour amener le système de commande (22) à régler le débit d'alimentation de l'outil de fraisage (18) pendant les opérations de fraisage sur la base des résultats de comparaison de déflexion.

**10.** Machine de fraisage selon la revendication 9,
dans laquelle la mémoire lisible par ordinateur (26) est en outre codée avec des instructions qui, lorsqu'elles sont exécutées par les un ou plusieurs processeurs (20), amènent la machine de fraisage à déterminer le tenseur d'élasticité du composant (14) correspondant au point de surface sur la base des données de tenseur d'élasticité correspondant à chacun d'une pluralité de points de surface prédéfinis du composant (14).

**11.** Machine de fraisage selon la revendication 10,
dans laquelle la mémoire lisible par ordinateur (26) est en outre codée avec des instructions qui, lorsqu'elles sont exécutées par les un ou plusieurs processeurs (20), amènent la machine de fraisage à déterminer le tenseur d'élasticité du composant (14) correspondant au point de surface sur la base des données de tenseur d'élasticité correspondant à chacun de la pluralité de points de surface prédéfinis en amenant la machine de fraisage à :

identifier une pluralité des points de surface prédéfinis qui sont à une distance seuil du point de surface ; et déterminer le tenseur d'élasticité pour le composant correspondant au point de surface sur la base d'une interpolation entre les données de tenseur d'élasticité correspondant à chacun des points de surface prédéfinis, dans laquelle la mémoire lisible par ordinateur (26) est en outre codée avec des instructions qui, lorsqu'elles sont exécutées par les un ou plusieurs processeurs (20), amènent la machine de fraisage à identifier la pluralité de points de surface prédéfinis en amenant la machine de fraisage à identifier la pluralité de points de surface prédéfinis qui renferment le point de surface.

12. Machine de fraisage selon la revendication 9, 10 ou 11, dans laquelle la mémoire lisible par ordinateur (26) est en outre codée avec des instructions qui, lorsqu'elles sont exécutées par les un ou plusieurs processeurs (20), amènent la machine de fraisage à déterminer la déflexion estimée du composant (14) associée à la force estimée (F) en multipliant la force estimée (F) par le tenseur d'élasticité pour produire la déflexion estimée,
dans laquelle :

la force estimée (F) est un vecteur de force tridimensionnel dans un système de coordonnées de pièce (36) ;
la déflexion estimée est un vecteur de déflexion tridimensionnel dans le système de coordonnées de pièce (36) ;
le tenseur d'élasticité est une matrice 3x3 de nombres réels ; et
la mémoire lisible par ordinateur (26) est en outre codée avec des instructions qui, lorsqu'elles sont exécutées par les un ou
plusieurs processeurs (20), amènent la machine de fraisage à déterminer la déflexion estimée du composant (14) associée à la force estimée (F) en multipliant le vecteur de force tridimensionnel par la matrice 3x3 de nombres réels pour produire le vecteur de déflexion tridimensionnel.

13. Machine de fraisage selon l'une quelconque des revendications 9 à 12,
dans laquelle les un ou plusieurs critères de déflexion comportent des critères de déflexion maximale ; et
dans laquelle la mémoire lisible par ordinateur (26) est en outre codée avec des instructions qui, lorsqu'elles sont exécutées par les un ou plusieurs processeurs (20), amènent la machine de fraisage à fournir les commandes de contrôle au système de commande (22) pour amener le système de commande (22) à régler le débit d'alimentation de l'outil de fraisage (18) sur la base des résultats de comparaison de déflexion en diminuant le débit d'alimentation de l'outil de fraisage (18) en réponse à la détermination que la déflexion estimée du composant (14) dépasse les critères de déflexion maximale.

14. Machine de fraisage selon l'une quelconque des revendications 9 à 13,
dans laquelle la mémoire lisible par ordinateur (26) est en outre codée avec des instructions qui, lorsqu'elles sont exécutées par les un ou plusieurs processeurs (20), amènent la machine de fraisage à fournir les commandes de contrôle au système de commande (22) pour amener le système de commande (22) à régler le débit d'alimentation de l'outil de fraisage (18) sur la base d'une quantité selon laquelle la déflexion estimée du composant s'écarte de l'au moins un critère de déflexion.

15. Machine de fraisage selon l'une quelconque des revendications 9 à 14,
dans laquelle la mémoire lisible par ordinateur (26) est en outre codée avec des instructions qui, lorsqu'elles sont exécutées par les un ou plusieurs processeurs (20), amènent la machine de fraisage à fournir les commandes de contrôle au système de commande (22) pour amener le système de commande (22) à régler le débit d'alimentation de l'outil de fraisage (18) en réglant au moins l'un parmi un débit de broche de l'outil de fraisage (18) et un débit d'alimentation de translation de l'outil de fraisage (18).

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2214070 A1

- US 2016327931 A1

### Non-patent literature cited in the description

- **DONG ZHAOHUI et al.** *FEA-based prediction of machined surface errors for dynamic fixture-workpiece system during milling process*
- **ZHANG XIAOMING et al.** *flexible workpiece vibration suppression in milling process based on a new response metric*

- **QINGHUA SONG et al.** *Sherman-Morrison-Woodbury formulas in instantaneous dynamic of peripheral milling for thin-walled component*